# EUROPÄISCHE PATENTSCHRIFT

(11) **EP 3 896 283 B1**
(45) Veröffentlichungstag und Bekanntmachung des Hinweises auf die Patenterteilung: **24.05.2023**
(21) Anmeldenummer: 21163711.1
(22) Anmeldetag: 19.03.2021
(51) Int. Cl.: F04B 7/00, F04B 7/02, F04B 43/04, F04B 13/00

(54) **DRUCKKOPF MIT MIKROPNEUMATISCHER STEUEREINHEIT**
PRINTHEAD WITH MICROPNEUMATIC CONTROL UNIT
TÊTE D'IMPRESSION POURVUE D'UNITÉ DE COMMANDE MICROPNEUMATIQUE

(30) Priorität: 19.04.2020 DE 102020002351
(43) Veröffentlichungstag der Anmeldung: 20.10.2021
(73) Patentinhaber: EXEL Industries S.A., 51200 Epernay (FR)
(72) Erfinder: Büstgens, Burkhard, 79194 Gundelfingen (DE)
(74) Vertreter: Keenway Patentanwälte Neumann Heine Taruttis

(56) Entgegenhaltungen:
- WO-A1-2013/139326
- US-A- 3 776 277
- US-A1- 2007 139 488
- US-A1- 2010 321 448

## Beschreibung

Die Erfindung betrifft das Gebiet der Druckköpfe für Beschichtungsmittel zum Drucken, Beschichten oder Dispensieren - kurz zum Applizieren - von flüssigen Stoffen auf Flächen von Körpern. Insbesondere betrifft sie das Applizieren mit einem Drucckopf, Dosierkopf, Dispensierer oder anderen Flüssigkeits-Applikatoren, im Folgenden durchgehend als Druckkopf 1 bezeichnet, mit einer Vielzahl von Kanälen, die in geometrisch regelmäßiger Anordnung, vorzugsweise in Reihen, angeordnet sind. Die Erfindung betrifft im Besonderen das Gebiet der Drop-on-Demand-Applikation - eingeschlossen ist die Fluidstrahl-Applikation - von Fluidmengen in der Größenordnung im Bereich von Pikolitern, Nanolitern, Mikrolitern oder größer pro Flüssigkeits-Abgabe, von Fluiden von niedriger bis hoher Viskosität (Größenordnung von 1 mPas [Millipascalsekunden] bis 1 Pas [Pascalsekunden]), welche auch Partikel (Größenordnung: bis zu 0,3 mm [Millimeter] Partikelgröße) in Konzentrationen bis zu 90% enthalten können, mit einer Abgabefrequenz bis in den Kilohertz-Bereich und einem Kanalabstand bis weit unter einem Millimeter.

Druckköpfe sind beispielsweise bekannt aus der US 20120/0321448 A1. Verwendungsmöglichkeiten erfindungsgemäßer Druckköpfe sind gegeben im Bereich der Lackierung, der Abdichtung oder des Klebens von Fahrzeugen aller Art wie Kraftfahrzeugen, aber auch Flugzeugen und Schiffen, insbesondere beim Verkleben von Bauteilen für solche Fahrzeuge, vornehmlich unter Einsatz von Industrierobotern (insbesondere Mehrachs-Knickarmrobotern) zur Bewegung der Köpfe oder im Bereich der Beschichtung von Bauteilen jeglicher Art einschließlich Produkten aus der Verbrauchgüterindustrie mit flüssigen Beschichtungsmitteln, unter Einsatz von Industrierobotern oder kartesischen Robotern, oder integriert in Single-Pass Bedruckungs- oder Beschichtungsanlagen, sowie im Bereich aller im Zusammenhang mit Gebäuden benötigten Beschichtungen. Die Erfindung betrifft ferner auch das Drucken mit einem mobilen Gerät.

Die vorliegende Erfindung basiert auf Druckköpfen oder Dosierköpfen, welche auf dem mikropneumatischen Antriebsprinzip beruhen, wie beschrieben in der Schrift DE 10 2009 029946 A1.

Desweiteren wird in WO 2013/139326 A1 ein Mikro-Pilotventil vorgestellt, welches in Druckköpfen oder Dosierköpfen Verwendung findet. Ein derartiges Pilotventil umfasst ein diskretes Schließelement in einer Kammer, die mit einem Steuerdruck-Ausgang verbunden ist. Das diskrete Schließelement schließt wechselseitig eine obere Öffnung, die unter Umgebungsdruck steht, oder eine untere Öffnung, die mit einer Druckversorgung verbunden ist. Angetrieben wird das diskrete Schließelement durch einen Stößel, der durch die erste Öffnung hindurch ragt und von außerhalb durch einen Piezo-Biegewandler aktuiert wird. Auf diese Weise kann das Totvolumen der Kammer des Mikro-Pilotventils gering gehalten werden und es können hohe Druckgradienten in den Schaltvorgängen erreicht werden. Nachteilig ist dabei jedoch ein erheblicher Verschleiß des unteren Ventilsitzes und des Stößels infolge der harten Schließvorgänge und infolge dessen eine Vergrößerung des Hubes des Membran-Schließelementes. Eine weitere Folge der harten Schließvorgänge ist die Verkürzung der Lebensdauer der Piezo-Biegewandler aufgrund der zyklischen hohen mechanischen Belastungsspitzen. Wünschenswert wäre in dieser Hinsicht, eine harte Interaktion des Stößels mit einem Ventilsitz zu vermeiden. Ferner haben diskrete Schließelemente nach WO 2013/139326 A1 mit ausreichender Härte und Haltbarkeit eine hohe Masse. Diese muss beim Schließen des der oberen Öffnung durch den pneumatischen Druck aus der unteren Öffnung bewegt werden, was keine schnellen Schließzeiten ermöglicht und die Unterstützung von separaten Mikro-Federelementen erforderlich macht.

Die Aufgabe der vorliegenden Erfindung ist es, die aus dem Stand der Technik bekannten Nachteile zumindest teilweise zu überwinden und insbesondere die Funktion, die Lebensdauer und die Leistung einer mikropneumatischen Steuereinheit gemäß DE 10 2009 029 946 A1 und des Pilotventils gemäß WO 2013/139326 A1 zu verbessern und gleichzeitig die Herstellungskosten zu verringern.

Die Aufgabe wird gelöst durch die Merkmale des unabhängigen Anspruchs. Die abhängigen Ansprüche sind auf vorteilhafte Weiterbildungen gerichtet.

Der erfindungsgemäße pneumatisch aktuierte Mehrkanal-Beschichtungskopf mit einer mikropneumatischen Steuereinheit mit einer Vielzahl von Steuerkanälen dient zur Generierung der Steuerdrücke pc in dem mikropneumatisch aktuierten Mehrkanal-Druckkopf zur Beschichtung von Bauteilen mit einem Beschichtungsmittel, wobei ein Steuerkanal gekennzeichnet ist
a) durch ein Ventilelement aus einer Ventilbohrung in einer Ventilplatte und einer Membranschicht, welche an einer ersten Längsseite der Ventilplatte liegt und im Bereich der Ventilbohrung als Membran-Schließelement ausgebildet ist, dessen Form durch seitlich der Ventilbohrung gelegene Aussparungen bestimmt ist,
b) durch einen Mikroaktuator mit einem Stößel, der das Membran-Schließelement durch die Ventilbohrung hindurch betätigt, sodass das Ventilelement öffnet,
c) ein mikropneumatisches Element in Serienschaltung mit dem Ventilelement, wobei sich an einem Verbindungsknoten zwischen dem mikropneumatischen Element und dem Ventilelement der Steuerdruck ausbildet und sich eine Kavität befindet, die mit den pneumatisch betriebenen Beschichtungsmittel-Ejektoren verbunden ist,
e) schließlich eine Druckbeaufschlagung der Serienschaltung, die so gerichtet ist, dass bezogen auf das Ventilelement ein Druckgefälle von der Membranseite zur Ventilbohrung besteht.

Die Ventilplatte und die Membranschicht erstrecken sich über alle Kanäle der mikropneumatischen Steuereinheit und können jeweils als ein zusammenhängendes Stück kostengünstig gefertigt werden. Die Membranschicht bildet im unterhalb der Ventilbohrung ein Membran-Schließelement, welches durch ein oder mehrere Aussparungen in der Membranschicht geformt wird. Der Begriff" unterhalb" ist dabei so zu verstehen, dass er eine erste Längsseite der Ventilplatte bezeichnet. Im Vergleich zu einem diskreten Membran-Schließelement wie beispielsweise einer Kugel, wie in WO 2013/139326 A1 vorgeschlagen, ist das Membran-Schließelement nahezu massefrei. Ferner kann implizit durch ein geeignetes Membran-Material, durch die Membran-Stärke und durch die Geometrie der Membran-Aussparung eine Rückstellkraft erzeugt werden, die das durch das Druckgefälle angetriebene Verschließen der Ventilbohrung unterstützt. Aus der geringen Masse des Membran-Schließelementes resultiert eine geringe Stoßbelastung auf den Piezo-Biegewandler und eine kurze Schließzeit.

Grundsätzlich basieren alle pneumatischen Schaltkreise oder Netzwerke in der Technik aus Serienschaltungen von zwei oder mehreren pneumatischen Elementen, auch als pneumatische Impedanzen Z bezeichnet, zwischen zwei Druckniveaus beziehungsweise einem Druckgefälle, beispielsweise zwischen einem hohen Druckniveau pH und einem niedrigen Druckniveau pL.Dabei kann jede Impedanz aus weiteren Impedanzen oder einem Netzwerk von Impedanzen zusammengesetzt werden. Je nach dem Verhältnis der beteiligten Impedanzen stellt sich an deren Verbindungsknoten ein entsprechendes Druckniveau ein, das der Höhe nach zwischen den zwei Druckniveaus liegt. Ein einzelnes pneumatisches Element kann eine lineare oder nichtlineare Drossel sein oder ein Ventilelement, wobei systemtheoretisch letzteres auch als nichtlineare Drossel angesehen werden kann.

Bevorzugt ist die Ventilbohrung, die zusammen mit dem Membran-Schließelement ein Ventilelement bildet, beispielsweise mit einer ersten mikropneumatischen (nichtlinearen) Impedanz Z1 assoziiert und das mikropneumatische Element, das eine beliebige mikropneumatische Impedanz oder eine Kombination daraus enthalten kann, mit einer zweiten mikropneumatischen Impedanz Z2 assoziiert.

Bevorzugt stellt das mikropneumatische Element beispielsweise eine lineare Drossel dar, wenn es beispielsweise eine (als zweite Bohrung bezeichnete) einfache Bohrung ist, die in die Kavität mündet. Auch kann es sich bei der zweiten Bohrung um mehrere Bohrungen oder eine Siebstruktur handeln, die in die Kavität münden und parallel geschaltet sind.

Dabei weist die zweite Bohrung einen geringeren Durchmesser als die Ventilbohrung auf. Je nach Applikation ist der Durchmesser der Ventilbohrung beispielsweise 1,5 bis 3 mal so groß wie der Durchmesser der zweiten Bohrung. Allgemeiner ausgedrückt, wird die bevorzugte Reihenschaltung aus dem Ventilelement und dem mikropneumatischen Element so ausgelegt, dass bei geöffnetem Ventilelement ein möglichst hoher Druckabfall über das zweite pneumatische Element besteht. Je nach Applikation sollte der Strömungswiderstand des pneumatischen Elements mindestens 2, 3, 5, 10 oder 20 mal so groß sein wie der des Ventilelementes im geöffneten Zustand.

Umgekehrt fällt stets die gesamte zur Verfügung stehende Druckdifferenz aus dem hohen Druckniveau pH und dem niedrigen Druckniveau pL über das Ventilelement ab, wenn die Ventilbohrung durch das Membran-Schließelement verschlossen ist.

Das Ventilelement und das mikropneumatische Element können innerhalb der Reihenschaltung in ihrer Position vertauscht werden, so lange gewährleistet ist, dass über das Ventilelement ein Druckgefälle von dem Membran-Schließelement zur Ventilbohrung hin besteht, um diese Druck-unterstützt durch das Membran-Schließelement schließen zu können. Grundsätzlich wirkt die Kraft des Stößels auf das Membran-Schließelement dazu in entgegengesetzter Richtung, also entgegen dem Druckgefälle, um das Membran-Schließelement von der Ventilbohrung abzuheben und den Durchfluss von Luft zu ermöglichen. Aus der Position des Ventilelements und des pneumatischen Elements innerhalb der pneumatischen Reihenschaltung ergeben sich verschiedene Ausführungsformen von mikropneumatischen Steuereinheiten, die weiter unten anhand der Figuren beschrieben werden.

Es existiert ein Sonderfall, wenn die Ventilbohrung mit einem niedrigen Druck oder Druckniveau pL (L=LOW), beispielsweise Umgebungsdruck, beaufschlagt ist und die zweite Bohrung mit einem höheren Betriebsdruck oder hohen Druckniveau pH (H=HIGH) beaufschlagt ist und wenn ferner die zweite Bohrung in kleinem Abstand (von beispielsweise 20 µm [Mikrometer] bis 100µm) unterhalb der der Ventilbohrung angeordnet ist und damit in den Wirkungsbereich des Membran-Schließelementes kommt. Beispielsweise können die Ventilbohrung und zweite Bohrung konzentrisch angeordnet sein oder ihre Mittelachsen können um einen kleinen Abstand versetzt liegen. Ist der vertikale Abstand zwischen Ventilbohrung und zweiter Bohrung in der Kavität klein, so befindet sich das Membran-Schließelement in seiner unteren Position nahe an der zweiten Bohrung. In dieser Position werden die horizontalen, bezüglich der zweiten Bohrung radialen Spaltströmungen an der Unterseite des Membran-Schließelementes bestimmend für den Strömungswiderstand des mikropneumatischen Elementes und dessen Nichtlinearität nimmt stark zu. Der Strömungswiderstand der zweiten mikropneumatischen Impedanz Z2 wird unendlich bei vollständiger Abdichtung, also bei Kontakt des Membran-Schließelementes mit dem Mündungsbereich der zweiten Bohrung in die Kavität. Hier nimmt der Steuerdruck pc den Wert des niedrigen Druckniveaus pL an.

Nachteilig ist an dieser Konfiguration, dass für eine vollständige Dichtung der unteren Mikroöffnung gegen den Betriebsdruck (hohes Druckniveau) pH eine hohe Kraft durch den Aktuator, beispielsweise einem Piezo-Biegewandler, aufgebracht werden muss und der Piezo-Biegewandler in der unteren Position bereits in einem stark ausgelenkten Zustand innerhalb seines Stellbereiches befindet und somit dessen KraftReserve zum Verschließen der zweiten Bohrung gegen den Betriebsdruck klein ist. Ein weiterer Nachteil ist, dass nun der Stößel permanent durch die Membrane auf die untere Mikroöffnung schlägt, was einen hohen Verschleiß verursacht und eine hohe, Lebensdauer-verkürzende Stoßbeanspruchung für den Piezo-Biegewandler darstellt.

Diese Nachteile lassen sich teilweise abmildern. Zum einen werden der Stößel und der damit verbundene Piezo-Biegewandler Applikations-abhängig so konfiguriert und angesteuert, dass der lastfreie, technisch mögliche Stellbereich des Aktuators, gemessen an der Kontaktfläche des Stößels, zwischen beispielsweise 20µm, 40µm, 60µm oder 100µm oberhalb und 40µm, 60µm, 100µm oder 150µm unterhalb der Dichtfläche der Ventilbohrung liegt. Also befindet sich in der oberen Position die Kontaktfläche des Stößels oberhalb der Dichtfläche der oberen Mikroöffnung, sodass sie das Membran-Schließelement nicht berührt. Alternativ lässt sich die Mittenposition oder Null-Lage der Kontaktfläche des Stößels innerhalb des Stellbereiches als Kriterium für eine Referenz-Ausrichtung des Piezo-Biegewandlers heranziehen, welche im Falle eines Bimorph-Piezo-Biegewandlers beispielsweise dann vorliegt, wenn dieser elektrisch und mechanisch Spannungs-frei ist, oder im Falle eines Monomorph-Piezo-Biegewandlers einfach als die Mitte des Stellbereiches definiert werden kann.

Bevorzugt wird der Stellbereich eine Mikro-Aktuators so gelegt, dass sich die Mittenposition oder Null-Lage des Stellbereiches eines Mikroaktuators möglichst unterhalb der Dichtfläche der Ventilbohrung befindet, beispielweise in einem Abstand von 20µm, 40µm, 60µm, 100µm oder 150µm. Jedoch kann die Mittenposition auch virtuell unterhalb der Mündung der der zweiten Mikrobohrung gelegt werden, denn je weiter unten diese liegt, desto höhere Aktuationskräfte F stehen zur Verfügung, um eine gute Dichtwirkung an der Mündung der zweiten Mikrobohrung zu erzielen. Dabei muss aber der Piezo-Biegewandler insgesamt mit hoher Gesamt-Auslenkung betrieben werden, also einen großen Stellbereich aufweisen, was sich ungünstig auf dessen Kraft und untere Eigenfrequenz auswirkt. Um die Schließkräfte an der Mündung der zweiten Mikrobohrung klein zu halten, muss der Durchmesser der unteren Mikrobohrung klein genug gewählt werden, beispielsweise 50µm bis 300µm. Damit wird jedoch der Strömungswiderstand der zweiten Bohrung verhältnismüßig groß und es liegt eine (nichtlineare) Drossel mit hohem Druckabfall vor und die Zeitkonstante des Druckaufbaus in der Kavität wird verschlechtert.

Der Stellbereich wird bevorzugt so gewählt, dass sich die obere Position des Stellbereiches geringfügig oberhalb der Position der Dichtfläche des Ventilelementes befindet. Gemäß des innerhalb des Stellbereichs nach oben hin progressiven Kraftverlaufs eines Piezo-Biegewandlers steht in dieser Position eine hohe Stellkraft Fₒₚₑₙ für das Öffnen des Ventilelementes zur Verfügung. Diese beträgt bei einer bevorzugten Auslegung der Aktuation mindestens 2/3 der in der oberen Position des Stellbereiches zur Verfügung stehenden maximalen Stellkraft Fₘₐₓ. Hierzu sei erwähnt, dass beispielsweise bei einem bimorphen Piezo-Biegewandler eine Auslenkung in die obere Position des Stellbereiches durch elektrische Spannungsbeaufschlagung der oberen Lamelle (Kontraktion) erfolgt und der Piezo-Biegewandler in der oberen Position des Stellbereiches unter maximaler mechanischer Vorspannung steht. Wird sodann die obere Piezolamelle entladen und zeitgleich die untere Lamelle mit Spannung beaufschlagt, so addieren sich die mechanisch induzierte Vorspannung durch die bestehende Auslenkung und die piezoelektrisch induzierte Vorspannung. Somit besitzt die maximal für die Stellaufgabe zur Verfügung stehende Stellkraft Fₘₐₓ in der oberen Position des Stellbereiches den doppelten Betrag im Vergleich zu der einen Piezo-Biegewandler charakterisierenden Klemmkraft in der Null-Lage.

Es sei darauf hingewiesen, dass diese Betrachtungen zur Auslegung des Stellbereichs und zur Lage der Mittenposition des Mikroaktuators bevorzugt auch Gültigkeit haben, wenn keine direkte pneumatische Interaktion der zweiten Bohrung mit dem Membran-Schließelement vorliegt und die zweite Bohrung an anderer Stelle in die Kavität mündet. Da dann keine hohe Kraftreserve für die Abdichtung eines Ventilloches gegen einen Betriebsdruck in einigem Abstand unterhalb des Ventilelementes aufgebracht werden muss, genügen hier bereits die kleineren unter den angegebenen Stellbereichen, was sich positiv auf Lebensdauer, Kraft und Eigenfrequenz der Mikro-Aktuatoren auswirkt. Es sei weiter angemerkt, dass in diesem Fall die zweite Bohrung grundsätzlich an jeder anderen Stelle des gesamten Totvolumens, beispielsweise in die Kavität, die pneumatische Aktuations-Kammer des Ejektors und die Verbindung dazwischen, einmünden kann.

Es sei weithin angemerkt, dass die Ventilbohrung je nach Applikation einen Durchmesser von 0,3mm [Millimeter], 0,4mm, 0,5mm, oder 0,8mm und die zweite Mikrobohrung je nach Applikation einen Durchmesser von 0,1mm, 0,15mm, 0,2mm oder 0,3mm aufweist. Weiterhin sind die Ventilbohrung und die zweite Bohrung so zu bemessen, dass je nach Applikation pneumatische Schaltzeiten von 0,05ms [Millisekunden] bis 1 ms oder von 0,5ms bis 5ms erreicht werden. Dabei werden je nach Applikation die Kavität, Fluid-Ejektor und zwischenliegender Verbindung so bemessen, dass das zusammengenommene Pneumatik-Totvolumen im Bereich von 1µl [Mikroliter], 2µl, 4µl oder 10µl liegt. Die Verbindung zwischen Kavität und Fluid-Ejektor liegt beispielsweise zwischen 0,2mm und 0,5mm und die Länge zwischen 2mm und 8mm.

Es sei weiterhin angemerkt, dass sich im Bereich unterhalb des Ventilelementes ein Anschlag befinden kann, der zur Initialisierung der Lage des Aktuators (inklusive Stößel), beispielsweise der Null-Lage oder einer andern Referenz-Lage, dient, beispielsweise während der Montage. Dabei werden bei der Montage zuerst die Piezolamellen des Piezo-Biegewandlers in einen definierten Ladungszustand versetzt beziehungsweise definierte elektrische Spannungen angelegt und sodann der Aktuator inklusive Stößel gegen den Anschlag beispielsweise mittels Stellschrauben angestellt.

Der Anschlag kann innerhalb des Stellbereiches des Aktuators, bezogen auf die Kontaktfläche des Stößels liegen. In diesem Fall wirkt er auch während des Betriebes als Anschlag oder Hubbegrenzung für eine untere Membran-Position des Membran-Schließelementes. Dieser Fall ist beispielsweise dann gegeben, wenn die zweite Mikrobohrung als Ventilsitz mit dem Membran-Schließelement interagiert. Beispielsweise kann für diesen Fall festgelegt werden, dass im Falle eines bimorphen Piezo-Biegewandlers die untere Membranposition mit der Null-Lage oder Mittenposition des Stellbereiches des bimorphen Piezo-Biegewandlers zusammenfallen soll. In diesem Fall steht dessen volle einseitige Auslenkung von der Null-Lage bis zur oberen Position des Stellbereiches zur Verfügung und für die Abdichtung der zweiten Bohrung gegen den Betriebsdruck (das hohe Druckniveau) pH auf der Höhe der unteren Membranposition die volle Klemmkraft des Piezo-Biegewandlers in der Null-Lage. Es sei angemerkt, dass diese Betrachtung analog gilt für einen monomorphen Piezo-Biegewandler, wobei hier jedoch für die Abdichtung nur die Hälfte der maximalen Klemmkraft Fₘₐₓ bezogen auf dessen spannungsfreie Null-Lage, also Fₘₐₓ/2 zur Verfügung steht. Hierzu sei angemerkt, dass durchaus Lage- und Positionsungenauigkeiten von bis zu 20% bis 30% des Stellbereiches zu berücksichtigen sind und sich die erfinderische Lehre nicht auf die Fälle beschränkt ist in denen die exakten Lagen und Positionen eingehalten werden.

Der Anschlag kann weiterhin außerhalb (unterhalb oder oberhalb) des Stellbereiches des Aktuators liegen, bezogen auf die Kontaktfläche des Stößels. In diesem Fall wird während des Betriebes der mikropneumatischen Steuereinheit der Anschlag nicht durch das Membran-Schließelement berührt. Um einen Anschlag außerhalb des Stellbereiches des Aktuators zu nutzen, wird dieser für den Vorgang der initialen Ausrichtung außerhalb seines im laufenden Betrieb genutzten elektrischen Betriebsbereiches angesteuert. Liegt beispielsweise der Anschlag unterhalb des Stellbereiches des Aktuators, so wird im Falle eines Piezo-Biegewandlers die untere Piezolamelle mit einer Überspannung Vₑ angesteuert, die höher ist als die Betriebsspannung U und/oder zusätzlich die obere Lamelle gegenpolig angesteuert.

Während der hier beschriebene Aufbau der mikropneumatischen Steuereinheit und dessen Betriebsweise wie oben ausgeführt bereits eine optimale Ausnutzung des Kraftverlaufes eines Piezo-Biegewandlers bieten und dabei gleichzeitig die Impulsbeanspruchung für das Öffnen des Ventilelementes gering halten, so können dennoch weitere Vorkehrungen getroffen werden, um Stoß-Beanspruchungen von den Piezo-Biegewandlern gering zu halten. Diese beinhalten die Verwendung von elastomeren Materialen an verschiedenen Stellen des Aktuationsstranges und werden weiter unten anhand der Figuren beschrieben.

Vorsorglich sei angemerkt, dass die hier verwendeten Zahlwörter ("erste", "zweite",...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Es zeigen:
Fig. 1 zeigt das Funktionsprinzip eins gattungsgemäßen mikropneumatisch betriebenen Druckkopfes anhand eines pneumatischen Schaltbildes.
Fig. 2 zeigt eine Aufsicht auf pneumatisches Netzwerk mit n=2 Kanälen. Ventilplatte und Membranschicht sind transparent dargestellt.
Fig. 3 zeigt einen Querschnitt durch ein Ausführungsbeispiel einer mikropneumatischen Steuereinheit zur Erzeugung eines Steuerdruckes pc, dargestellt im belüfteten Zustand.
Fig. 4 zeigt einen Querschnitt durch ein Ausführungsbeispiel einer mikropneumatischen Steuereinheit zur Erzeugung eines Steuerdruckes pc, dargestellte im entlüfteten Zustand.
Fig. 5 zeigt einen Querschnitt durch einen Mikroaktuator in Form eines bimorphen Piezo-Biegewandlers zusammen mit einem Stößel und dessen Befestigung zur Betätigung des Ventilelementes.
Fig. 6 erläutert in einer vergrößerten Darstellung die Verhältnisse im Zusammenhang mit der Aktuation einer mikropneumatischen Steuereinheit mittels eines bimorphen Piezo-Biegewandlers.
Fig. 7 zeigt einen Querschnitt durch einen Kanal einer Sondervariante der mikropneumatischen Steuereinheit, in der die zweite Bohrung unterhalb des ersten Ventilelementes angebracht ist, mit einem so kleinen Abstand, dass diese in Interaktion mit dem Membran-Schließelement ein zweites Ventilelement bildet. Gezeigt ist auch das Verschraubungskonzept.
Fig. 8 zeigt einen Querschnitt durch einen Kanal einer weiteren Sondervariante der mikropneumatischen Steuereinheit, in der die zweite Bohrung unterhalb des ersten Ventilelementes angebracht ist. Hier ist das Ventilelement Membran-seitig direkt mit der gemeinsamen Druckversorgungsleitung des Betriebsdruckes (hohen Druckniveaus) pH verbunden. Der Stößel zur Betätigung des Ventilelementes ragt zusätzlich durch die zweite Platte hindurch.
Fig. 9 zeigt einen möglichen Membranaufbau aus mehreren Schichten sowie einen Stößel mit eingegossenem elastischem Kontaktelement.

Innerhalb dieser Beschreibung werden möglicherweise verschiedenen Begriffe in abweichender Weise von den allgemeinen Begriffsdefinitionen verwendet. Hierfür gelten folgende Begriffsdefinitionen:
Das Attribut "Mikro" im Zusammenhang mit mikropneumatischen Elementen soll anzeigen, dass ein oder mehrere die Funktion der Komponente wesentlich bestimmende Abmaße überwiegend zwischen 1µm und 999µm liegen.

Das Attribut "Mikro" im Zusammenhang mit einem Aktuator beschreibt die Eigenschaft eines Aktuators, Stellbewegungen im Bereich weit unter einem Millimeter abzugeben, beispielsweise zwischen 0 und 300µm.

Die Bezeichnung "Umgebungsdruck" bezeichnet hier das betragsmäßig untere oder niedrige Druckniveau pL im Gegensatz zum betragsmäßig höheren Betriebsdruck (hohes Druckniveau) pH. Die Bezeichnung Umgebungsdruck schließt auch Drücke ein, die höher oder niedriger als Umgebungsdruck sind. Beispielsweise kann statt des Umgebungsdruckes grundsätzlich auch ein Unterdruck verwendet werden, was die Leistungsfähigkeit des Druckkopfes steigern kann.

Ein "Kanal" 2 bezeichnet die kleinste elektrisch individuell ansteuerbare Einheit des Beschichtungskopfes oder Druckkopfs 1.

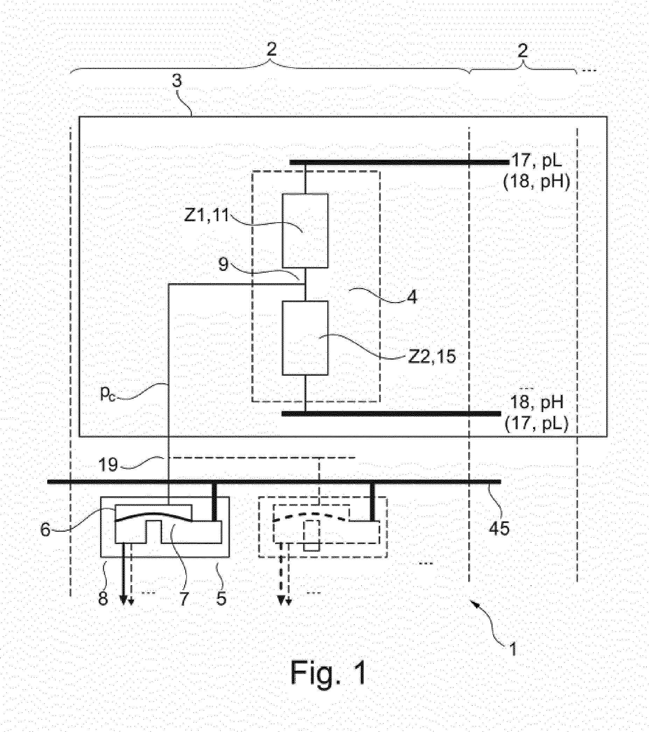

Fig. 1 zeigt das Funktionsprinzip von Druckköpfen 1 aus einer Vielzahl von Kanälen 2, die nach dem elektro-pneumatischen Arbeitsprinzip arbeiten. Jeder Kanal enthält ein oder mehrere Fluid-Ejektoren 5, welche im Wesentlichen ein Fluid-Membranventil 7 enthalten, dessen Fluidmembrane mittels eines pneumatischen Steuerdrucks pc über eine Aktuations-Kammer 6 aktuiert wird. Im Normalzustand herrscht in der Aktuations-Kammer 6 ein Überdruck gegenüber dem Fluiddruck in einer Fluid-Zufuhr 45, sodass das Fluid-Membranventil 7 geschlossen ist. Eine Entlüftung der Aktuations-Kammer 6 öffnet aufgrund des Fluiddrucks das Fluid-Membranventil 7 und es kommt zu einem Fluidaustritt durch die ein oder mehreren Fluidauslässe 8, wobei bei kurzen Entlüftungszeiten im Bereich von beispielsweise weniger als 1 ms, 2 ms oder 5 ms ein Tropfenausstoß erfolgt und bei längerer Entlüftungszeit ein Fluidstrahl austritt. Für eine detailliertere Beschreibung wird auf die Schrift DE 10 2009 029946 A1 verwiesen.

Die erforderlichen Steuerdrücke pc für alle Kanäle 2 werden in einer mikropneumatischen Steuereinheit 3 generiert aus zwei zur Verfügung stehenden Druckniveaus: einem niedrigen Druckniveau 17 (pL), z.B. dem Umgebungsdruck (wie im Folgenden bezeichnet), und einem höheren (hohen) Druckniveau, dem Betriebsdruck 18 (pH). Diese können je nach Ausführungsform auch umgepolt werden (Werte in Fig. 1 in Klammern).

Die folgenden Ausführungen beziehen sich auf einen beliebigen einzelnen Kanal aus der mikropneumatischen Steuereinheit 3: zwischen Betriebsdruck pH und Umgebungsdruck pL ist aufgespannt ein mikropneumatisches Netzwerk 4 in Form einer Serienschaltung aus im Wesentlichen zwei mikropneumatischen Impedanzen Z1 und Z2, welche jeweils selbst aus einem Netzwerk aus weiteren Impedanzen bestehen können. An deren Verbindungsknoten befindet sich eine Kavität 9, die mit der Aktuations-Kammer 6 des Fluid-Ejektors 5 über eine möglichst kurze Verbindung 19 verbunden ist. Im Verhältnis der Größe der Impedanzen Z1 und Z2 stellt sich analog zu elektrischen Spannungsteiler-Gesetzmäßigkeiten in der Kavität 9 ein Steuerdruck pc ein. Die mikropneumatische Impedanz Z1 enthält ein Ventilelement 11, das über einen Mikro-Aktuator 25 betätigt wird und die mikropneumatische Impedanz Z2 ein mikropneumatisches Element 15, an dem bei geöffnetem Ventilelement 11 (aus Z1) ein Druckabfall auftritt.

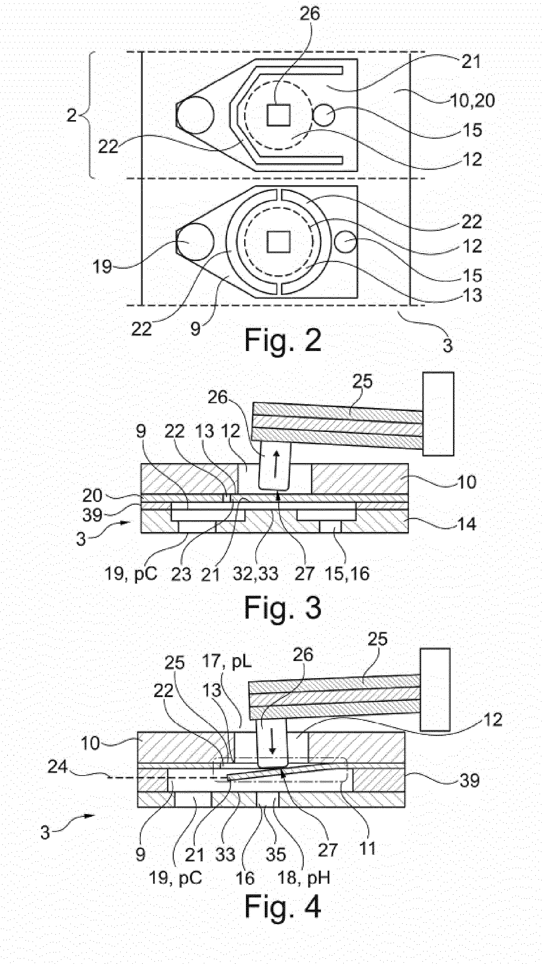

Die Figuren 2 und 3 zeigen eine erste Ausführungsform, die Fig. 4 eine leichte Abwandlung davon. Dargestellt ist in Fig. 3 der Querschnitt durch einen Kanal 2 der mikropneumatischen Steuereinheit 3. Der Begriff senkrecht bezeichnet hier eine senkrechte Richtung wie in Fig. 3 dargestellt.

Die Kavität 9 wird nach oben begrenzt durch eine Membranschicht 20, die sich ihrerseits unterhalb einer Ventilplatte 10 befindet, die eine Ventilbohrung 12 im Bereich der Kavität 9 aufweist. Die Membranschicht 20 deckt die Ventilbohrung 12 ab und weist Aussparungen 22 auf, die einen Widerstands-armen Luftdurchtritt durch die Membranschicht 20 ermöglichen und die Form eines beweglichen Membran-Schließelementes 21 definieren, das letztlich zusammen mit der Ventilbohrung 12 ein Ventilelement 11 bildet. Die Ventilbohrung 12 kann als kreisrundes Loch ausgeführt sein oder jede andere Form haben, beispielsweise eine ovale oder längliche Form beziehungsweise einen entsprechenden Querschnitt aufweisen. Die ein oder mehreren Aussparungen 22 sind beispielsweise so geformt, dass sich wie in Fig. 2 oben gezeigt ein Membran-Schließelement 21 in Zungenform ergibt, das einseitig mit der übrigen Membranschicht 20 verbunden ist und dessen Lage definiert.

In Fig. 4 ist zu erkennen, dass ein solches Zungen-förmiges Membran-Schließelement 21 in ausgelenktem Zustand sich einseitig (im Bild links) von der Ventilplatte 10 abhebt, wenn dieses durch einen Stößel 26 ausgelenkt wird. Dabei kann der Stößel 26 auch außermittig in der Ventilbohrung 12 angeordnet sein oder an einem Ende der Ventilbohrung 12, sofern diese beispielsweise länglich ausgeführt ist. Dies kann den Vorteil haben, dass das Membran-Schließelement 21 bei der Bewegung durch den Stößel 26 zuerst auf einer Seite geöffnet werden kann, sodass eine geringere Aktuationskraft F erforderlich ist.

In Fig. 2, unten sind als weiteres Ausführungsbeispiel zwei halbkreisförmige beziehungsweise halbkreisringförmige Aussparungen 22 skizziert, die eine weitere Form des Membran-Schließelementes ergeben. Weiterhin können eine größere Zahl von zirkular angeordneten Aussparungen 22 in einigem Abstand zur Ventilbohrung 12 verwendet werden oder weitere Möglichkeiten, jedoch sollte ein gewisser Mindestabstand von beispielsweise 20 µm bis 100 µm von der Kante der Ventilbohrung an keiner Stelle unterschritten werden. Zusammen mit einer bestimmten Form des Membran-Schließelementes 21 kann beispielsweise durch eine definierte Membran-Biegefestigkeit eine gewisse Rückstellkraft implementiert werden, um den ansonsten rein durch den Überdruck in der Kavität 9 bewirkten Schließvorgang des Membran-Schließelements 21 durch dessen implizite Rückstellkraft zu unterstützen und so die Schließzeit zu verkürzen. Dies setzt jedoch voraus, dass das Membran-Schließelement 21 so ausgelegt ist, dass dessen Grund-Eigenfrequenz ωo erheblich größer ist als 1/Ts (Ts= Schließzeit).

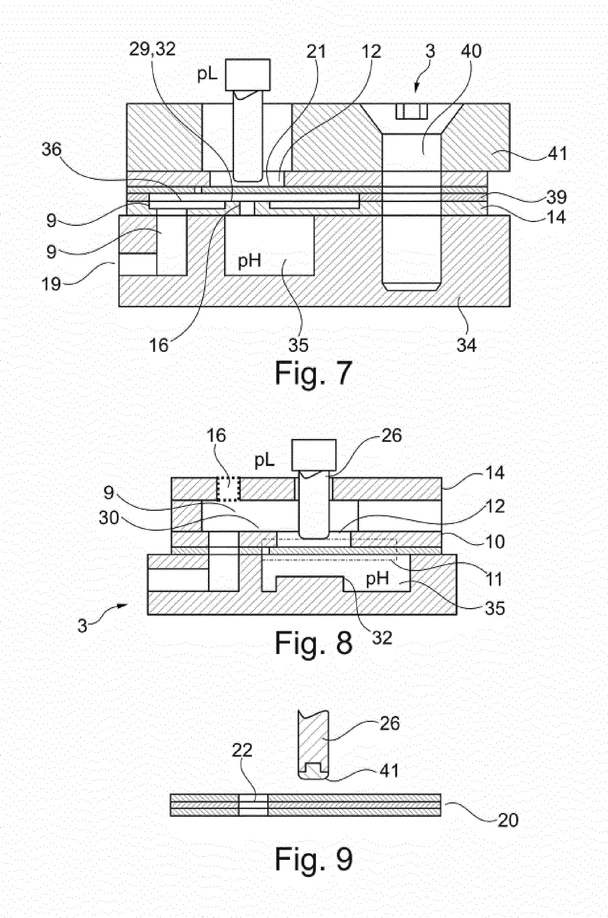

Nach unten wird die Kavität 9 begrenzt durch eine zweite Platte 14, die ein mikropneumatisches Element 15 in Form einer als zweite Bohrung 16 bezeichneten Bohrung enthält, weiterhin die pneumatische Verbindung 19 zur Aktuations-Kammer 6 des Fluid Ejektors 5 enthält. Dabei ist die Ventilbohrung 12 verbunden mit dem Umgebungsdruck pL und die zweite Bohrung 16 mit dem Betriebsdruck pH über eine für alle Kanäle 2 gemeinsam genutzte Druckversorgungsleitung 35 (Fig. 7) innerhalb einer Basisplatte 34 verbunden. Im geschlossenen Zustand des Ventilelementes 11 stellt sich in der Kavität der Betriebsdruck pH ein, im geöffneten Zustand strömt durch die zweite Bohrung 16 in Fig. 3 und Fig. 4 und durch das Ventilelement 11 stationär Luft von der Druckversorgung 35 bis Umgebungsdruck-seitigen Ende der Ventilbohrung 12. Der sich in der Kavität 9 ausbildende Steuerdruck pc entspricht sodann dem Verhältnis deren Strömungswiderstände.

Das geöffnete Ventilelement 11 (unter Beachtung der Membran-Auslenkung und damit zusammenhängenden Auslegung des Mikro-Aktuators) und die zweite Bohrung 16 werden hinsichtlich ihrer Strömungswiderstände so dimensioniert, dass der Steuerdruck pc einen Wert zwischen 5% bis 20% des Betriebsdruckes PH annimmt. Richtwerte für geeignete Bohrungsdurchmesser befinden sich weiter oben in der Beschreibung. Um einen konstant großen Öffnungsspalt des Ventilelementes 11 zu erreichen, lässt sich ein Anschlag 32 verwenden, wie in Fig. 3 angedeutet. Im skizzierten Fall ist dieser beispielsweise unterhalb der Höhe der Membranschicht 20 in einem Abstand von 30µm bis 100µm angebracht und befindet sich hier beispielsweise innerhalb des Stellbereiches 28 des Mikroaktuators 25. In Fig. 4 ist hingegen statt des Anschlages 32 eine Referenzposition 33 skizziert, welche sich in größerem Abstand zur Membranschicht befindet. Dargestellt ist auch das Membran-Schließelement 21 des Ventilelementes 11 in der unteren Position 31 des Stellbereiches 28 des Mikroaktuators 25, bzw. in der unteren Membranposition 24. Die Referenzposition 33 befindet sich hier so weit unterhalb der unteren Position 31 des Stellbereiches 28, dass während des Betriebes das Membran-Schließelement 21 nicht mit der Referenzposition 33 in Berührung kommt. Somit kommt es auch nicht zu Belastungsspitzen im Piezo-Biegewandler 25 im Zusammenhang mit periodischen Schlagbelastungen.

In Fig. 3 und 4 sind weiterhin je eine Abstands-Platte 39 unterschiedlicher Stärke dargestellt, welche die Kavität 9 teilweise seitlich begrenzen. Durch die Verwendung von Abstandsplatten werden die vertikalen, die Stellwege und -bereiche bestimmenden Randbedingungen eingestellt.

Weiterhin ist in Fig. 3 und 4 ein Mikroaktuator 25 in Form eines bimorphen Piezo-Biegewandlers dargestellt. Fest verbunden mit dem beweglichen Ende des Piezo-Biegewandlers 25 ist der Stößel 26, welcher durch die Ventilplatte 10 hindurch ragt und an einer unten ausgebildeten Kontaktfläche 27 auf das Membran-Schließelement 21 einwirkt. Dargestellt ist in Fig. 3 der Mikroaktuator 25 in der oberen Position 30 seines Stellbereiches 28, welche beispielsweise in einem Abstand von 20µm, 40µm, 60µm oder 100µm oberhalb der Dichtfläche 13 des Ventilelementes 11 befindet. Dieser Abstand ist erforderlich, um eine Berührung des Membran-Schließelementes 21 mit dem Stößel 26 im geschlossenen Zustand des Ventilelementes 11 zu verhindern und damit Undichtigkeiten auszuschließen.

Dargestellt in Fig. 4 ist der Mikroaktuator 25 in der unteren Position 31 seines Stellbereiches 28 in der gleichzeitig auch das Membran-Schließelement 21 sich in seiner unteren Position 24 befindet. Der Abstand der Kontaktfläche 27 des Stößels 26 von der Dichtfläche 13 des Ventilelementes 11 beträgt dann beispielsweise 40µm, 60µm, 100µm oder 150µm.

Mit Verweis auf Fig. 2 sei angemerkt, dass die typische Breite eines Kanals 2 für höher aufgelöste Beschichtungs-Applikationen, beispielsweise für die Applikation von niedrig- bis mittelviskosen Lacken zwischen 0,7 mm und 1,5 mm liegt, für Wandfarben aus dem Baubereich bei 1,5 mm bis 3 mm liegt und bei Anwendungen mit höherviskosen Kleb- und Dichtstoffen bei größer als 2 mm liegt.

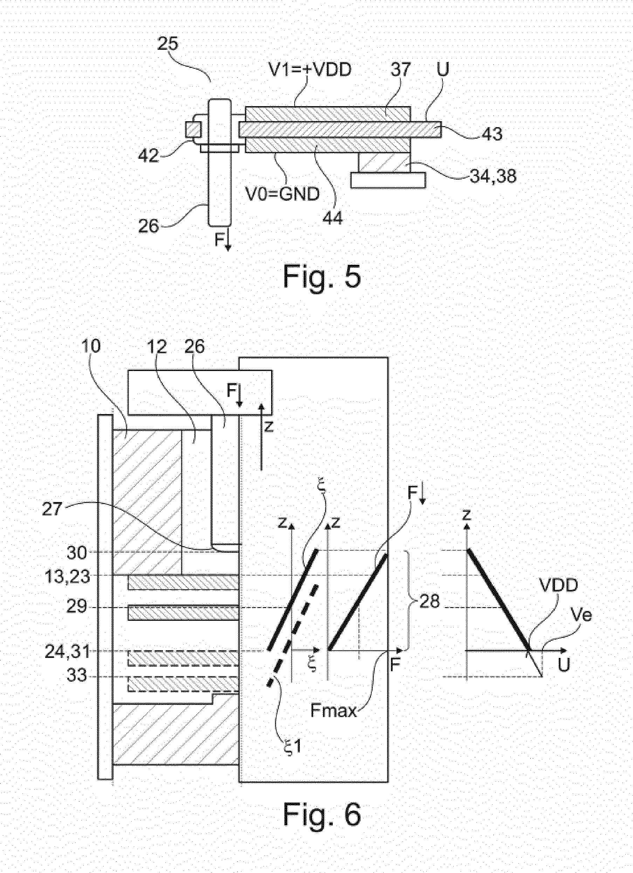

In Fig. 5 ist ein Mikroaktuator 25 abgebildet, bestehend aus einem bimorphen Piezo-Biegewandler mit Mittelelektrode 43 und einem damit an seinem beweglichen Ende verbundener Stößel 26. Der Stößel 26 ist über ein elastisches Element 42 aus einem elastomeren Material mit dem Piezo-Biegewandler verbunden, welches die Übertragung hoher mechanischer Spannungsspitzen, welche beispielsweise beim Aufschlagen der Kontaktfläche des Stößels 26 auf den Anschlag entstehen, reduziert. Dies dient der Verbesserung der Lebensdauer des Piezo-Biegewandlers 25. Der Piezo-Biegewandler 25 sei, wie dargestellt, fest mit der Verschraubungsplatte 41, der Basisplatte 34, dem Gehäuse 38 des Druckkopfes 1 verklemmt oder verklebt. Angesteuert wird der Piezo-Biegewandler 25 beispielsweise durch Anlegen einer festen elektrischen Spannung V1 = +VDD an die obere Piezolamelle 37 und durch Anlegen eines Masse-Anschlusses V0 = GND an die untere Piezolamelle 44. Die Spannung und die Polung der Piezolamellen 37, 44 sind in der Regel immer gleichgerichtet. Die Spannung U an der Mittelelektrode 43 wird zwischen +VDD und GND geschaltet. Liegt an der Mittelelektrode 43 die Spannung U = GND an, so liegt an der oberen Piezolamelle 37 eine Spannungsdifferenz von +VDD an, was diese lateral kontrahiert und den Piezo-Aktuator nach oben auslenkt in die obere Position 30 seines Stellbereiches 28 (siehe auch Fig. 6). Umgekehrt: Liegt an der Mittelelektrode 43 des Piezo-Biegewandlers 25 die Spannung U = +VDD an, so liegt an der unteren Piezolamelle 44 die Spannungsdifferenz von +VDD an, was den Piezo-Aktuator nach unten auslenkt in die untere Position 31 seines Stellbereiches 28. So bewegt sich die Auslenkung x eines lastfreien Piezo-Biegewandlers 25, welche symmetrisch um die Null-Lage (elektrisch und mechanisch spannungsfreie Lage des Piezo-Biegewandler 25) gemessen wird, innerhalb des Stellbereiches 28 des Piezo-Biegewandlers 25.

Betrachtet man die für die Aktuierung des Membran-Schließelementes 21 verfügbare Aktuationskraft F (bei U = +VDD, Kraft in negativer z-Richtung) in Abhängigkeit der Auslenkung x, so addiert sich oberhalb der Null-Lage 29 zu der konstanten piezoelektrisch erzeugten Kraft die Kraft aufgrund der mechanischen Spannungen durch die Vor-Auslenkung des Piezo-Biegewandlers 25, welche in der oberen Position 30 des Stellbereiches 28 des Mikroaktuators 25 am höchsten ist. Diese entspricht der doppelten Klemmkraft des Piezo-Aktuators, welche als eine Kenngröße die maximale Aktuationskraft bezeichnet, wenn die Auslenkung des Piezo-Biegewandlers 25 durch Klemmung unterdrückt, also null wird. Diese Kraft steht in negative z-Richtung für die Aktuation zur Verfügung, wenn in der oberen Position 30 des Stellbereiches 28 eine Spannung +VDD an der Mittelelektrode 43 anliegt.

In vorteilhafter Weise lässt sich während des Betriebes des Druckkopfes 1 auf ähnliche Weise in gewissen Grenzen der gesamte Stellbereich 28 für den Betrieb in z-Richtung verändern und verschieben, indem die Spannung V1 abweichend von +VDD eingestellt wird, oder indem die Spannung V0 abweichend von GND eingestellt wird, oder indem die Spannung U abweichend nicht abwechselnd zwischen +VDD und GND geschaltet wird, sondern zwischen davon abweichenden Werten. Dabei kann folgendes festgehalten werden: eine Vergrößerung des Stellbereiches kann nur durch Vergrößern des Spannungshubes ΔU der beiden Schaltstellungen an der Mittelelektrode 43 erreicht werden. Eine Verschiebung des Stellbereiches 28 kann beispielsweise durch Verändern der Spannung V1 und/oder V0 bezogen auf den Spannungsverlauf der Spannung U an der Mittelelektrode erreicht werden. So kann beispielsweise eine Verschiebung der Lage des Stellbereichs 28 in negative z-Richtung erreicht werden lediglich durch Verringerung der Spannung V1, siehe Auslenkung ξ1 (gestrichelte Linie). Dabei ist zu beachten, dass die obere Piezolamelle 37 mit einer im Resultat negativen Spannungsdifferenz (V1 - VDD) betrieben wird, wenn die Mittelelektrode 43 mit +VDD angesteuert wird und der Mikro-Aktuator 25 sich in der unteren Position des (neuen) Stellbereiches 28 befindet. Aufgrund der Gefahr der Depolarisierung des Piezomaterials können derartige Maßnahmen jedoch nur in sehr begrenztem Umfang durchgeführt werden. Sinnvoll ist jedoch die Benutzung dieser Maßnahme, um die Lage des Stellbereich 28 eines bimorphen Piezo-Biegewandlers 25 an die Lage eines Anschlages 32, einer Referenzposition 33, eines Ventilsitzes oder an die Dichtfläche 13 des Ventilelementes 11 feinanzupassen. So können beispielsweise während des Betriebes kleinere Veränderungen ausgeglichen werden, die im Langzeitbetrieb entstehen. Es sei hier darauf hingewiesen, dass gleichwertige Wirkungen auch dadurch erzielt werden können, dass die Spannungen V0 oder U nach denselben Kriterien variiert werden. Mögliche Fallunterscheidungen und Kombinationen sollen hier nicht tiefer beleuchtet werden, sondern können jederzeit von einem Durchschnittsfachmann auf dem Gebiet der Elektrotechnik vorgenommen werden zur Ableitung fallspezifisch adäquater Lösungen.

Fig. 6 verdeutlicht diese Zusammenhänge in mehreren Diagrammen für einen frei beweglichen (ungeklemmten) Piezo-Biegewandler 25 unter statischen Bedingungen. Dargestellt ist rechts die Spannung U an der Mittelelektrode 43 und die resultierende z-Position gemessen an der Kontaktfläche 27 des Stößels 26. Das mittlere Diagramm zeigt die resultierende in negative z - Richtung zur Verfügung stehende Aktuationskraft F, mit der das Öffnen des Ventilelementes 11 aktuiert wird. Diese liegt an der unteren Position 31 des Stellbereiches 28 bei null (0), es stehen dort also keine Stellkräfte F zur Verfügung, und beträgt an der oberen Position 30 des Stellbereiches 28 Fₘₐₓ. Die Stellkraft F ist somit von unten nach oben zunehmend und es stehen nahe der oberen Position 30 die höchsten Stellkräfte F in negativer z-Richtung zur Verfügung. Dargestellt ist auch links davon die Auslenkung x um die Null-Lage oder Mittenposition eines spannungsfreien Piezo-Biegewandlers 25.

Vorteilhafter Weise wird der Mikroaktuator hinsichtlich der Aktuation des Membran-Schließelementes 21 so ausgerichtet, dass die Position der Dichtfläche 13 des Ventilelementes 11, beziehungsweise die obere Membranposition 23, möglichst nahe unterhalb der oberen Position 30 des Stellbereiches 28 des bimorphen Piezo-Biegewandlers 25 liegt, sodass mindestens zwei Drittel (2/3) der maximalen Aktuationskraft Fₘₐₓ für das Öffnen des Membran-Schließelementes 21 zu Verfügung stehen. Diese Auslegung wird links in Fig. 6 anhand der Lage des Ventilelementes 11, der Kontaktfläche 27 des Stößels 26 und der verschiedenen Positionen des Membran-Schließelementes 21 verdeutlicht. Dargestellt ist der Stößel in der oberen Position 30 des Stellbereiches 28. In dieser bevorzugten Position beträgt der Abstand des Stößels 26 von der Dichtfläche 13 des Ventilelementes 11 maximal ein Drittel (1/3) des (lastfreien) Stellbereiches 28, mindestens jedoch 20µm oder 40µm je nach Applikation. Weiterhin wird verdeutlicht, dass in der entsprechenden Auslegung die Mittenposition 29 (bei einem monomorphen Piezo-Biegewandler 25) oder die Null-Lage 29 (bei einem bimorphen Piezo-Biegewandler 25, auf den sich die rechten Diagramme in Fig. 6 beziehen) unterhalb der Dichtfläche 13 des Ventilelementes 11 liegt, beispielsweise in einem Abstand von 20µm, 40µm, 60µm, 100µm oder 150µm, wie bereits oben erwähnt. Weiterhin wird der Fall gemäß Fig. 4 gezeigt, in dem die untere Position 31 des Stellbereiches 28 mit der unteren Membranposition 24 zusammenfällt, also im Betrieb kein unterer Anschlag kontaktiert wird.

Diese Auslegung ist besonders geeignet für die Gewährleistung einer langen Lebensdauer der Piezo-Biegewandler, da hier allenfalls beim Kontaktieren des Membran-Schließelementes 21 eine gewisse Schlagbelastung auftritt, diese aber gering ist, da die Kontaktierung nahe der statischen oberen Position 23 stattfindet, wo die Bewegung des Stößels 26 noch einen geringen Impuls aufweist. Fig. 6 illustriert auch, auf welche Weise eine Referenz-Ausrichtung des (bimorphen) Piezo-Biegewandlers 25 an einer Referenzposition 33 vorgenommen werden kann, die sich unterhalb der unteren Position 30 des Stellbereiches 28 des (bimorphen) Piezo-Biegewandlers 25 befindet. Wie bereits beschrieben, wird dieser für den Vorgang der initialen Ausrichtung außerhalb seines im laufenden Betrieb genutzten elektrischen Betriebsbereiches angesteuert. In dem gezeigten Beispiel wird im Falle eines bimorphen Piezo-Biegewandlers 25 dieser mit überhöhter Spannung Ve > +VDD angesteuert. Alternativ oder zusätzlich kann die obere Piezolamelle 37 durch Verringerung der an der oberen Piezolamelle 37 angelegten Spannung V1 beispielsweise um 30% gegenpolig angesteuert werden, wobei sich diese entlang des Biegewandlers dehnt und eine weitere Auslenkungs-Zunahme in negative z-Richtung bewirkt.

Fig. 7 veranschaulicht einen von Fig. 3 abweichenden Fall, dass sich die zweite Bohrung 16 direkt unterhalb der Ventilbohrung 12 befindet, innerhalb des Wirkungsbereiches des Membran-Schließelementes 21. Dadurch wird durch die Kombination aus Membran-Schließelement 21 und zweiter Bohrung 16 ein zweites Ventilelement, das mit demselben Mikroaktuator 25 und mit demselben Membran-Schließelement 21 wie das Ventilelement 11 betätigt wird.

Als vorteilhaft erweist es sich, wie im Ausführungsbeispiel nach Fig. 3 eine Abstands-Platte 39 definierter Stärke zu verwenden, um den Hub des Membran-Schließelementes 21, welcher der Abstand ist zwischen der oberen Membranposition 23 und der unteren Membranposition 24, auf diese Weise festzulegen. Als sinnvoll erweist sich unter pneumatischen Gesichtspunkten die Einstellung des Hubes auf 50µm (30µm bis 80µm), durch die Verwendung einer Abstandsplatte 39 entsprechender Stärke.

Um in der unteren Membran-Position 24 eine ausreichende Dichtwirkung der zweiten Bohrung 16 gegenüber dem Betriebsdruck 18 zu erreichen, darf in dieser Position der Mikro-Aktuator 25 nicht in der Nähe der unteren Position 31 seines Stellbereiches 28 arbeiten, an der die Aktuationskraft F gegen 0 geht. Vielmehr muss, um eine hohe Schließkraft zu erhalten, der Stellbereich des Mikro-Aktuators 25 so gelegt werden, dass die Null-Lage oder Mittenposition 29 eines Mikroaktuators 25 möglichst weit unten, bezogen auf die Nomenklatur in Fig. 6, liegt. Hier erweist es sich als vorteilhaft, wenn sich Null-Lage oder Mittenposition 29 innerhalb einer (unteren) Toleranz von +/-20µm (bis +/- 50 µm) um die untere Membran-Position 24, die sich infolge des Anschlages 32 ergibt, befindet. Ebenso muss die obere Position 30 des Stellbereiches 28 des Mikro-Aktuators 25 mindestens 20µm (bis 50µm) (obere Toleranz) oberhalb der Position der Dichtfläche 13 des Ventilelementes 11 positioniert sein, damit die Kontaktfläche 27 des Stößels 26 das Membran-Schließelement 21 nicht im geschlossenen Zustand des Ventilelementes 11 berührt. Somit ergibt sich bei Einhaltung der Mindest-Toleranzen für den Stellbereich 28 für den Mikro-Aktuators 25 ein Wert von 2 × (Hub + untere Toleranz + obere Toleranz) = 2 × 90µm (2 × 70µm bis 2 × 155µm) = 180µm (~300µm).

In Fig. 8 ist eine weitere Ausführungsform der mikropneumatischen Steuereinheit 3 in der Schnittdarstellung wiedergegeben. Diese ist gekennzeichnet durch ein Ventilelement 11 bestehend aus der zuvor beschriebenen Ventilplatte 10 mit Ventilbohrung 12 und der darunterliegenden Membranschicht 20 mit dem Membran-Schließelement 21. In dieser Ausführungsform wird jedoch das Ventilelement 11 direkt auf der Seite der Membranschicht 20 mit dem Betriebsdruck (hohes Druckniveau) pH beaufschlagt, der über eine Druckversorgungsleitung 35 zur Verfügung gestellt wird. Unterhalb des Ventilelementes 11 kann sich wie oben ein Anschlag 32 befinden zur besseren Definition der unteren Membranposition oder eine Referenzposition 33, an der der Mikroaktuator 35 in einem Referenzierungsschritt ausgerichtet wird. In diesem Ausführungsbeispiel befindet sich die Kavität 9 mit der Verbindung 19 zum Fluid-Ejektor 5 oberhalb des Ventilelementes 11 also oberhalb der Ventilplatte 10. Die zweite Platte 14 begrenzt die Kavität 9 nach oben und befindet sich damit auch oberhalb der Ventilplatte 10. Der Stößel 26 des Mikro-Aktuators 25 ragt in diesem Fall durch die Ventilbohrung 12 in der Ventilplatte 10 und zusätzlich durch die zur Ventilbohrung 12 konzentrisch angeordnete zweite Öffnung 16 in der zweiten Platte 14, die zusammen mit dem Stößel-Schaft (zumindest teilweise) das mikropneumatische Element 15 bildet. Hierzu sei angemerkt, dass in einer speziellen Ausführungsform die zweite Bohrung 16 und der Stößel-Schaft als enge, die Bewegung des Stößels gerade noch ermöglichende Spielpassung ausgeführt sein kann und das mikropneumatische Element 15 eine weitere, parallelgeschaltete zweite Bohrung 16 enthalten kann (gestrichelt gezeichnet), die an andere Stelle in die Kavität 9 mündet und so ausgelegt ist, dass sie einen niedrigeren Strömungswiderstand hat als der Spalt der Spielpassung.

Hinsichtlich der einzelnen Komponenten und Baugruppen der mikropneumatischen Steuereinheit 3 sei Folgendes ergänzt: Die im folgenden aufgeführten Platten mit ihren Strukturen bzw. Mikrostrukturen beinhalten die Vielzahl der Kanäle 2 der mikropneumatische Steuereinheit 3: Die Ventilplatte 10 mit den Ventilbohrungen 12; die zweite Platte 14 mit den zweiten Bohrungen 16, optionalen Anschlägen 32 oder Referenzpositionen 33 und optionalen zweiten Ventilsitzen; die Membranschicht 20 mit den Aussparungen 22, die die Membran-Schließelemente 21 definieren; die Abstandsplatten 39 mit den Ausnehmungen, die die laterale Form der Kavität bestimmen, weiterhin optionale Dichtungs-Schichten. Weiterhin können periphere Platten in der Auflistung hinzugenommen werden, wie die Verschraubungsplatte 41 mit allen Schraub-Löchern und erforderlichen Bohrungen; weiterhin die Basisplatte 34 mit der Druckversorgungs-Leitung 35, mit optional enthaltenen Anschlägen 32 sowie Verbindungen 19 zu den einzelnen Fluid-Ejektoren 5.

Mittels Schraubverbindungen 40 in regelmäßigen engen Abständen von wenigen Millimetern auf einer Linie entlang der Kanäle 2 können die Platten 10, 14, 20, 39, 41, 34 zu einer einzigen mikropneumatischen Steuereinheit 3 unter Einhaltung enger Toleranzen zusammengesetzt werden.

Die Materialwahl und Fertigung der einzelnen Platten 10, 14, 20, 39, 41, 34 richtet sich bevorzugt nach der angestrebten Stückzahl. Platten 10, 14, 20, 39, 41, 34 mit überwiegend 3-dimensionaler Ausdehnung wie Platte 34 oder 40 werden bevorzugt aus beliebigen festen Materialien gefertigt wie beispielsweise aus Metallen (z.B. Aluminium, Messing, Stahl, Edelstahl, Nickel) oder Kunststoffen (feste Thermoplaste, Duroplaste) und mit den üblichen Verfahren gefertigt werden. Die dünneren Platten 10, 14, 20, 39, 41, 34 wie beispielsweise die Platten 10, 14 oder 39 werden im Falle einer Massenproduktion bevorzugt aus Metallen wir Kupfer, Messing oder Edelstahl hergestellt, welche beispielsweise nasschemisch geätzt werden. Die dargestellten Stufen (Platte 14 in Fig. 3 und Fig. 7) können dabei beispielsweise durch beidseitiges, zeitgesteuertes Ätzen realisiert werden. Alternativ können auch Kunststoffe für die dünneren Platten verwendet werden und/oder Präge- oder Umformverfahren verwendet werden.

Die Membranschicht 20 besteht bevorzugt aus einer einzigen Schicht und einem einzigen Material, wie beispielsweise einem Metall (beispielsweise Edelstahl, Titan, Bronze, Nickel) in einer Dicke im Bereich von beispielsweise 10µm bis 100 µm, dabei kann die Herstellung durch Ätzen oder additive (galvanische) Prozesse erfolgen. Alternativ ist die Herstellung der Membranschicht 20 aus Hochleistungs-Polymeren (z.B. PEEK, PI, PTFE, PEI, PVDF) oder Elastomeren (PU, TPE,TPU, Silikone und viele andere) in unterschiedlichen Herstellungsverfahren (z.B. Prägen, Gießen, Stanzen, Laserstrukturieren, Trockenätzen) bevorzugt.

Schlägt im Betrieb der Stößel 26 das Membran-Schließelement 21 permanent auf einen unteren Anschlag 32, so sind zum einen Membrane und Anschlag 32 von mechanischem Verschleiß betroffen und zum anderen der Piezo-Biegewandler 25 Stoßbelastungen mit hoher Frequenz ausgesetzt. Verringern lassen sich diese Nachteile etwas, indem der Stoßkontakt durch Verwendung elastischer Materialien gedämpft wird, beispielsweise durch eine Stößel-Spitze mit einem Elastischen Element 41 (Fig. 9). Weiterhin lässt sich die Membranschicht aus einem Laminat aus mehreren Einzelschichten aufbauen, die unterschiedliche Funktionen erfüllen. So kann beispielsweise eine mittlere Schicht aus einem der oben genannten Metalle für eine vorgegebene mechanische Steifheit sorgen. Zusätzlich kann eine darunter und/oder darüber liegende Schicht aus einem der Elastomere Spannungsspitzen verringern, die beim Aufschlagen des Stößels 26 auf die Membrane oder der Membrane auf den Anschlag 32 entstehen und auf den Piezo-Biegewandler 25 übertragen werden. Umgekehrt kann auch eine Dämpfung der Membran-Bewegungen und Spannungsspitzen erreicht werden, wenn diese aus einem Schichtaufbau besteht mit zwei äußeren Metallschichten und einer dazwischenliegenden polymeren, elastomeren oder viskoelastischen Schicht.

Vorgestellt wird eine mikropneumatische Steuereinheit (3) mit einer Vielzahl von Steuerkanälen (2) zur Generierung der Steuerdrücke pc in einen pneumatisch aktuierten Mehrkanal-Beschichtungskopf (1) zur Beschichtung von Bauteilen mit einem Beschichtungsmittel, wobei ein Steuerkanal (2) gekennzeichnet ist durch ein Ventilelement (11) aus einer Ventilbohrung (12) in einer Ventilplatte (10) und einer Membranschicht (20), welche unterhalb der Ventilplatte (10) liegt und im Bereich der Ventilbohrung (12) als Membran-Schließelement (21)ausgebildet ist, dessen Form durch seitlich der Ventilbohrung (12 )gelegene Aussparungen bestimmt ist, durch einen Mikroaktuator (25) mit einem Stößel (26), der das Membran-Schließelement (21) durch die Ventilbohrung (12) hindurch betätigt, sodass das Ventilelement (1 1)öffnet, durch ein mikropneumatisches Element (15) in Serienschaltung mit dem Ventilelement (11), wobei sich an deren Verbindungsknoten der Steuerdruck (pc) ausbildet und sich eine Kavität (9) befindet, die mit mindestens einem pneumatisch betriebenen Beschichtungsmittel-Ejektor (5) verbunden ist, und durch eine pneumatische Druckbeaufschlagung der mikropneumatischen Steuereinheit (3), die so gerichtet ist, dass bezogen auf das Ventilelement (11) ein Druckgefälle von dem Membran-Schließelement (21) zur Ventilbohrung (12) in der Ventilplatte (10) besteht.

### Bezugszeichenliste

- 1: Druckkopf
- 2: Kanal
- 3: Mikropneumatische Steuereinheit mit einer Vielzahl von Kanälen
- 4: Mikropneumatisches Netzwerk
- 5: Fluid-Ejektor
- 6: Aktuations-Kammer
- 7: Fluid-Membranventil
- 8: Fluidauslässe
- 9: Kavität
- 10: Ventilplatte
- 11: Ventilelement
- 12: Ventilbohrung
- 13: Dichtfläche des Ventilelementes
- 14: Zweite Platte
- 15: Zweites mikropneumatisches Element
- 16: Zweite Bohrung
- 17: erstes (niedriges) Druckniveau, Umgebungsdruck pL
- 18: zweites (hohes) Druckniveau, Betriebsdruck pH
- 19: Verbindung zum Fluid-Ejektor
- 20: Membranschicht
- 21: Membran-Schließelement
- 22: Aussparung
- 23: obere Membran-Position
- 24: untere Membran-Position
- 25: Mikroaktuator inklusive Stößel, insbesondere monomorpher oder bimorpher Piezo-Biegewandler
- 26: Stößel
- 27: Kontaktfläche des Stößels
- 28: Lastfreier Stellbereich
- 29: Mittenposition, Null-Lage des Stellbereiches
- 30: Obere Position des Stellbereiches
- 31: Untere Position des Stellbereiches
- 32: Anschlag
- 33: Referenzposition
- 34: Basisplatte
- 35: Gemeinsame Druckversorgung
- 36: Zweites Ventilelement
- 37: Piezolamellen
- 38: Gehäuse
- 39: Abstands-Platte
- 40: Verschraubung
- 41: Verschraubungsplatte
- 42: Elastisches Element
- 43: Mittelelektrode
- 44: Untere Piezolamelle
- 45: Fluidzufuhr

- pH: hohes Druckniveau, Betriebsdruck
- pL: niedriges Druckniveau, Umgebungsdruck
- U: Spannung
- V0: Spannung
- V1: Spannung
- Ve: Überspannung
- ξ: Auslenkung
- ξ1: Auslenkung

## Patentansprüche

1. Pneumatisch aktuierter Mehrkanal-Beschichtungskopf (1) zur Beschichtung von Bauteilen mit einem Beschichtungsmittel mit einer mikropneumatischen Steuereinheit (3) mit einer Vielzahl von Steuerkanälen (2) zur Generierung der Steuerdrücke (pc) in dem Beschichtpungskopf (1),
wobei ein Steuerkanal (2) gekennzeichnet ist:
a) durch ein Ventilelement (11) aus einer Ventilbohrung (12) in einer Ventilplatte (10) und einer Membranschicht (20), welche an einer ersten Längsseite der Ventilplatte (10) liegt und im Bereich der Ventilbohrung (12) als Membran-Schließelement (21) ausgebildet ist, dessen Form durch seitlich der Ventilbohrung (12) gelegene Aussparungen bestimmt ist,
b) durch einen Mikroaktuator (25) mit einem Stößel (26), der das Membran-Schließelement (21) durch die Ventilbohrung (12) hindurch betätigt, sodass das Ventilelement (11) öffnet,
c) durch ein mikropneumatisches Element (15) in Serienschaltung mit dem Ventilelement (11), wobei sich an einem Verbindungsknoten zwischen dem mikropneumatischen Element (15) und dem Ventilelement (11) der Steuerdruck (pc) ausbildet und sich eine Kavität (9) befindet, die mit mindestens einem pneumatisch betriebenen Beschichtungsmittel-Ejektor (5) verbunden ist, und
e) durch eine pneumatische Druckbeaufschlagung der mikropneumatischen Steuereinheit (3), die so gerichtet ist, dass bezogen auf das Ventilelement (11) ein Druckgefälle von dem Membran-Schließelement (21) zur Ventilbohrung (12) in der Ventilplatte (10) besteht.

2. Pneumatisch aktuierter Mehrkanal-Beschichtungskopf (1) nach Anspruch 1, **dadurch gekennzeichnet, dass** der Strömungswiderstand des zweiten mikropneumatischen Elementes (15) mindestens doppelt so groß ist wie der Strömungswiderstand des Ventilelementes (11) im geöffneten Zustand.

3. Pneumatisch aktuierter Mehrkanal-Beschichtungskopf (1) nach einem der vorhergehenden Ansprüche, **dadurch gekennzeichnet, dass** ein lastfreier Stellbereich (28) des Stößels (26) bezogen auf dessen Kontaktfläche (27) zwischen 60 µm und 300 µm beträgt und die obere Position (30) des Stellbereiches (28) 20 µm bis 100 µm oberhalb und die untere Position (30) des Stellbereiches (28) 40 µm bis 150 µm unterhalb einer Dichtfläche (13) der Ventilbohrung (11) liegt.

4. Pneumatisch aktuierter Mehrkanal-Beschichtungskopf (1) nach Anspruch 3, **dadurch gekennzeichnet, dass** eine Mittenposition (29) des Stellbereiches (28) zwischen 20 µm und 100 µm unterhalb der Dichtfläche (13) der Ventilbohrung (11) liegt.

5. Pneumatisch aktuierter Mehrkanal-Beschichtungskopf (1) nach einem der vorhergehenden Ansprüche, **dadurch gekennzeichnet, dass** sich eine zweite Bohrung (16) innerhalb einer zweiten Platte (14) unterhalb der Ventilbohrung (12) befindet, so, dass in einer unteren Membranposition (24) das Membran-Schließelement (21) die zweite Bohrung (16) abdeckt und die Kavität (9) gegenüber dem an der zweiten Bohrung (16) anliegenden Betriebsdruck (pH) abdichtet.

6. Pneumatisch aktuierter Mehrkanal-Beschichtungskopf (1) nach Anspruch 5, **dadurch gekennzeichnet, dass** der Abstand zwischen einer oberen Membranposition (23), in der das Membran-Schließelement (21) die Ventilbohrung (12) verschließt und der unteren Membranposition (24), in der das Membran-Schließelement (21) die zweite Bohrung (16) verschließt, 30 µm bis 80 µm beträgt.

7. Pneumatisch aktuierter Mehrkanal-Beschichtungskopf (1) nach einem der vorhergehenden Ansprüche, **dadurch gekennzeichnet, dass** der Mikroaktuator (25) einen Piezo-Biegewandler enthält und sich zwischen Piezo-Biegewandler und Stößel (26) oder an einer Spitze (27) des Stößels (26) ein elastisches Element (41) zur Dämpfung von Stoßbelastungen befindet.

8. Pneumatisch aktuierter Mehrkanal-Beschichtungskopf (1) nach einem der vorhergehenden Ansprüche, **dadurch gekennzeichnet, dass** das Membran-Schließelement (21) einseitig mit der Membranschicht (20) verbunden ist und als Ventilzunge ausgebildet ist.

9. Pneumatisch aktuierter Mehrkanal-Beschichtungskopf (1) nach einem der vorhergehenden Ansprüche, **gekennzeichnet durch** einen Mikroaktuator (25) mit einen bimorphen Piezo-Biegewandler, dessen Stellbereich in Relation zur Position der Dichtfläche (13) in senkrechter Richtung verschoben wird, indem während des Betriebes und zumindest zeitweise eine Piezolamelle (37) des bimorphen Piezo-Biegewandlers entgegen ihrer Polarisationsrichtung betrieben wird.

10. Pneumatisch aktuierter Mehrkanal-Beschichtungskopf (1) nach Anspruch 9, **dadurch gekennzeichnet, dass** die Spannung an einer oberen Piezolamelle (37) während des Betriebes veränderlich ist.

## Claims

1. Pneumatically actuated multi-channel coating head (1) for coating of components with a coating agent, having a micro-pneumatic control unit (3) comprising a large number of control channels (2) for generating control pressures (pc) in the coating head (1),
a control channel (2) being **characterized by**:
a) a valve element (11) comprising a valve bore (12) in a valve plate (10) and a diaphragm layer (20) which is on a longitudinal side of the valve plate (10) and is designed as a diaphragm closing element (21) in the region of the valve bore (12), the shape of which diaphragm closing element is determined by recesses positioned laterally with respect to the valve bore (12),
b) a micro-actuator (25) having a plunger (26) that actuates the diaphragm closing element (21) through the valve bore (12) such that the valve element (11) opens,
c) a micro-pneumatic element (15) connected in series with the valve element (11), the control pressure (pc) developing and a cavity (9) being located at a connection node between the micro-pneumatic element (15) and the valve element (11), which cavity is connected to at least one pneumatically operated coating agent ejector (5), and
e) pneumatic pressurization of the micro-pneumatic control unit (3), which is directed such that, with respect to the valve element (11), there is a pressure gradient from the diaphragm closing element (21) to the valve bore (12) in the valve plate (10).

2. Pneumatically actuated multi-channel coating head (1) according to claim 1, **characterized in that** the flow resistance of the second micro-pneumatic element (15) is at least twice as great as the flow resistance of the valve element (11) in the open state.

3. Pneumatically actuated multi-channel coating head (1) according to either of the preceding claims, **characterized in that** a load-free operating range (28) of the plunger (26), with respect to the contact surface (27) thereof, is between 60 µm and 300 µm, and the upper position (30) of the operating range (28) is 20 µm to 100 µm above a sealing surface (13) of the valve bore (11) and the lower position (30) of the operating range (28) is 40 µm to 150 µm below said sealing surface.

4. Pneumatically actuated multi-channel coating head (1) according to claim 3, **characterized in that** a central position (29) of the operating range (28) is between 20 µm and 100 µm below the sealing surface (13) of the valve bore (11).

5. Pneumatically actuated multi-channel coating head (1) according to any of the preceding claims, **characterized in that** a second bore (16) is located within a second plate (14) below the valve bore (12), such that, in a lower diaphragm position (24), the diaphragm closing element (21) covers the second bore (16) and seals the cavity (9) with respect to the operating pressure (pH) at the second bore (16).

6. Pneumatically actuated multi-channel coating head (1) according to claim 5, **characterized in that** the distance between an upper diaphragm position (23), in which the diaphragm closing element (21) closes the valve bore (12), and the lower diaphragm position (24), in which the diaphragm closing element (21) closes the second bore (16), is 30 µm to 80 µm.

7. Pneumatically actuated multi-channel coating head (1) unit according to any of the preceding claims, **characterized in that** the micro-actuator (25) contains a piezo bending transducer, and a resilient element (41) for damping impact loads is located between the piezo bending transducer and the plunger (26) or on a tip (27) of the plunger (26).

8. Pneumatically actuated multi-channel coating head (1) according to any of the preceding claims, **characterized in that** the diaphragm closing element (21) is connected on one side to the diaphragm layer (20) and is designed as a valve tongue.

9. Pneumatically actuated multi-channel coating head (1) according to any of the preceding claims, **characterized by** a micro-actuator (25) having a bimorph piezo bending transducer, the operating range of which is displaced in the vertical direction in relation to the position of the sealing surface (13) by a piezo-lamella (37) of the bimorph piezo bending transducer being operated counter to the polarization direction thereof.

10. Pneumatically actuated multi-channel coating head (1) according to claim 9, **characterized in that** the voltage at an upper piezo-lamella (37) is variable during operation.

## Revendications

1. Tête de revêtement multicanaux à actionnement pneumatique (1) pour le revêtement de composants avec un agent de revêtement avec une unité de commande micropneumatique (3) avec une pluralité de canaux de commande (2) pour générer les pressions de commande (pc) dans la tête de revêtement (1),
un canal de commande (2) étant caractérisé :
a) par un élément de soupape (11) composé d'un alésage de soupape (12) dans une plaque de soupape (10) et d'une couche de membrane (20) qui est située sur un premier côté longitudinal de la plaque de soupape (10) et qui est réalisée dans la zone de l'alésage de soupape (12) en tant qu'élément de fermeture à membrane (21) dont la forme est déterminée par des évidements situés sur le côté de l'alésage de soupape (12),
b) par un micro-actionneur (25) avec un poussoir (26) qui actionne l'élément de fermeture à membrane (21) à travers l'alésage de soupape (12), de telle sorte que l'élément de soupape (11) s'ouvre,
c) par un élément micropneumatique (15) en connexion en série avec l'élément de soupape (11), la pression de commande (pc) se formant au niveau d'un nœud de liaison entre l'élément micropneumatique (15) et l'élément de soupape (11) et une cavité (9) étant présente, qui est reliée à au moins un éjecteur d'agent de revêtement à commande pneumatique (5), et
e) par une sollicitation par pression pneumatique de l'unité de commande micropneumatique (3), qui est dirigée de telle sorte que, par rapport à l'élément de soupape (11), il existe un gradient de pression de l'élément de fermeture à membrane (21) vers l'alésage de soupape (12) dans la plaque de soupape (10).

2. Tête de revêtement multicanaux à actionnement pneumatique (1) selon la revendication 1, **caractérisée en ce que** la résistance à l'écoulement du deuxième élément micropneumatique (15) est au moins deux fois plus élevée que la résistance à l'écoulement de l'élément de soupape (11) à l'état ouvert.

3. Tête de revêtement multicanaux à actionnement pneumatique (1) selon l'une quelconque des revendications précédentes, **caractérisée en ce qu'**une zone de réglage sans charge (28) du poussoir (26) par rapport à sa surface de contact (27) est comprise entre 60 µm et 300 µm et la position supérieure (30) de la zone de réglage (28) est située de 20 µm à 100 µm au-dessus et la position inférieure (30) de la zone de réglage (28) est située de 40 µm à 150 µn en dessous d'une surface d'étanchéité (13) de l'alésage de soupape (11).

4. Tête de revêtement multicanaux à actionnement pneumatique (1) selon la revendication 3, **caractérisée en ce qu'**une position centrale (29) de la zone de réglage (28) se situe entre 20 µm et 100 µm en dessous de la surface d'étanchéité (13) de l'alésage de soupape (11).

5. Tête de revêtement multicanaux à actionnement pneumatique (1) selon l'une quelconque des revendications précédentes, **caractérisée en ce qu'**un deuxième alésage (16) se trouve à l'intérieur d'une deuxième plaque (14) en dessous de l'alésage de soupape (12), de telle sorte que dans une position de membrane inférieure (24), l'élément de fermeture de membrane (21) recouvre le deuxième alésage (16) et étanchéifie la cavité (9) par rapport à la pression d'exploitation (pH) appliquée au deuxième alésage (16).

6. Tête de revêtement multicanaux à actionnement pneumatique (1) selon la revendication 5, **caractérisée en ce que** la distance entre une position de membrane supérieure (23), dans laquelle l'élément de fermeture de la membrane (21) ferme l'alésage de la soupape (12), et la position de membrane inférieure (24), dans laquelle l'élément de fermeture de la membrane (21) ferme le deuxième alésage (16), est de 30 µm à 80 µm.

7. Tête de revêtement multicanaux à actionnement pneumatique (1) selon l'une quelconque des revendications précédentes, **caractérisée en ce que** le micro-actionneur (25) contient un transducteur de flexion piézoélectrique et un élément élastique (41) pour amortir les charges de choc se trouve entre le transducteur de flexion piézoélectrique et le poussoir (26) ou à une pointe (27) du poussoir (26).

8. Tête de revêtement multicanaux à actionnement pneumatique (1) selon l'une quelconque des revendications précédentes, **caractérisée en ce que** l'élément de fermeture de membrane (21) est relié d'un côté à la couche de membrane (20) et est réalisé sous forme de languette de soupape.

9. Tête de revêtement multicanaux à actionnement pneumatique (1) selon l'une quelconque des revendications précédentes, **caractérisée par** un micro-actionneur (25) avec un transducteur de flexion piézoélectrique bimorphe, dont la zone de réglage est déplacée par rapport à la position de la surface d'étanchéité (13) dans la direction verticale, par le fait qu'une lamelle piézoélectrique (37) du transducteur de flexion piézoélectrique bimorphe est exploitée à l'encontre de sa direction de polarisation pendant l'exploitation et au moins temporairement.

10. Tête de revêtement multicanaux à actionnement pneumatique (1) selon la revendication 9, **caractérisée en ce que** la tension sur une lamelle piézoélectrique supérieure (37) est variable pendant l'exploitation.
